# EUROPEAN PATENT SPECIFICATION

(11) **EP 3 014 950 B1**
(45) Date of publication and mention of the grant of the patent: **28.03.2018**
(21) Application number: 13887612.3
(22) Date of filing: 26.06.2013
(51) Int. Cl.: H04W 88/02, H04W 4/02

(54) **OPTIMIZING LOCATION SERVICES IN WIRELESS DEVICES**
OPTIMIERUNG VON LOCATION-SERVICES IN DRAHTLOSEN GERÄTEN
OPTIMISATION DES SERVICES DE LOCALISATION DANS DES DISPOSITIFS SANS FIL

(43) Date of publication of application: 04.05.2016
(73) Proprietor: Intel IP Corporation, Santa Clara, CA 95054 (US)
(72) Inventor: STEINER, Itai, 49527 Petach Tikva M (IL)
(74) Representative: HGF Limited
(86) International application number: PCT/US2013/047914
(87) International publication number: WO 2014/209301

(56) References cited:
- US-A1- 2011 256 875
- US-A1- 2012 046 014
- US-A1- 2012 302 257
- US-A1- 2013 040 660

## Description

### TECHNICAL FIELD

This disclosure relates generally to the field of wireless communications, and in particular, to wireless device location identification.

### BACKGROUND ART

Given the advent of applications and services directed to advertisements, marketing opportunities, user navigation, and social networking, it has become increasingly important to accurately determine the location or position of wireless devices.

Typically, operating systems (OS) of wireless devices employ a centralized entity (i.e., singular location manager) that controls and manages various location information providers/sensors as well as distributes location information to requesting applications/clients that are registered for location services. Recently, however, the use of distributed location managers/entities have been proposed in an attempt to alleviate processing workloads associated with a single location manager.

With this said, it will be appreciated that different location information providers/sensors may have different power consumption implications that could potentially result in suboptimal performance of the wireless device.
US 2012/302257 relates to methods and apparatuses for use in a mobile device to identify one or more attributes for each of a plurality of positioning resources available at the mobile device. In an example, positioning resources may provide all or part of a position fix based, at least in part, on one or more wireless signals received by the mobile device, and/or one or more electrical signals received from one or more sensors onboard the mobile device. For example, in certain instances at least one of the positioning resources may have at least one attribute that is different than at least one other attribute of another positioning resource. In certain examples, at least one of the positioning resources may be selected for obtaining a position fix based, at least in part, on a request and one or more particular attributes

### SUMMARY

Aspects and embodiments of the invention are set out in the appended claims.

### BRIEF DESCRIPTION OF THE DRAWINGS

FIG. 1 depicts a functional block diagram of a wireless device distributed location management, in accordance with various aspects and principles of the present disclosure.
FIG. 2 depicts a flow diagram illustrating a method of managing distributed location manager entities, in accordance with various aspects and principles of the present disclosure.
FIG. 3 depicts a flow diagram illustrating an exemplary implementation of the method provided by FIG. 2, in accordance with various aspects and principles of the present disclosure.

### DETAILED DESCRIPTION

In the description that follows, like components have been given the same reference numerals, regardless of whether they are shown in different embodiments. To illustrate an embodiment(s) of the present disclosure in a clear and concise manner, the drawings may not necessarily be to scale and certain features may be shown in somewhat schematic form. Features that are described and/or illustrated with respect to one embodiment may be used in the same way or in a similar way in one or more other embodiments and/or in combination with or instead of the features of the other embodiments.

In accordance with various embodiments of this disclosure, what is proposed is a wireless device distributed location management system and method that optimizes the allocation and distribution of resources in providing location services by enabling communications between a main location processing entity and an auxiliary location processing entity and the dynamic evaluation of associated resources.

For example, in one embodiment, a system for a wireless device having location servicing capabilities is presented that includes a first location processing entity configured to manage one or more first client applications associated with the first location processing entity and manage one or more first location providers associated with the first location processing entity, the first client applications configured to initiate location service requests and the first location providers configured to perform location service operations; a second location processing entity configured to manage one or more second client applications associated with the second location processing entity, and manage one or more second location providers associated with the second location processing entity, the second client applications configured to initiate location service requests and the second location providers configured to perform location service operations; and a communications facility configured to accommodate communications between the first location processing entity and the second location processing entity. The second location processing entity reports the capabilities of the second location providers to the first location processing entity via the communications facility, and, in response to receiving a location service request, the first location processing entity evaluates capabilities of the first location providers and the reported capabilities of the second location providers to select one of the first or second location providers that optimize location service performance.

In another embodiment, a method of managing a wireless device having location servicing capabilities, is presented that includes managing, by a first location processing entity, one or more first client applications associated with the first location processing entity, the first client applications configured to initiate location service requests; managing, by the first location processing entity, one or more first location providers associated with the first location processing entity, the first location providers configured to perform location service operations; managing, by a second location processing entity, one or more second client applications associated with the second location processing entity, the second client applications configured to initiate location service requests; managing, by the second location processing entity, one or more second location providers associated with the second location processing entity, the second location providers configured to perform location service operations; and accommodating, via a communications facility, communications between the first location processing entity and the second location processing entity. The second location processing entity reports the capabilities of the second location providers to the first location processing entity via the communications facility, and, in response to receiving a location service request, the first location processing entity evaluates capabilities of the first location providers and the reported capabilities of the second location providers to select one of the first or second location providers that optimize location service performance.

These and other features and characteristics, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of claims. As used in the specification and in the claims, the singular form of "a", "an", and "the" include plural referents unless the context clearly dictates otherwise.

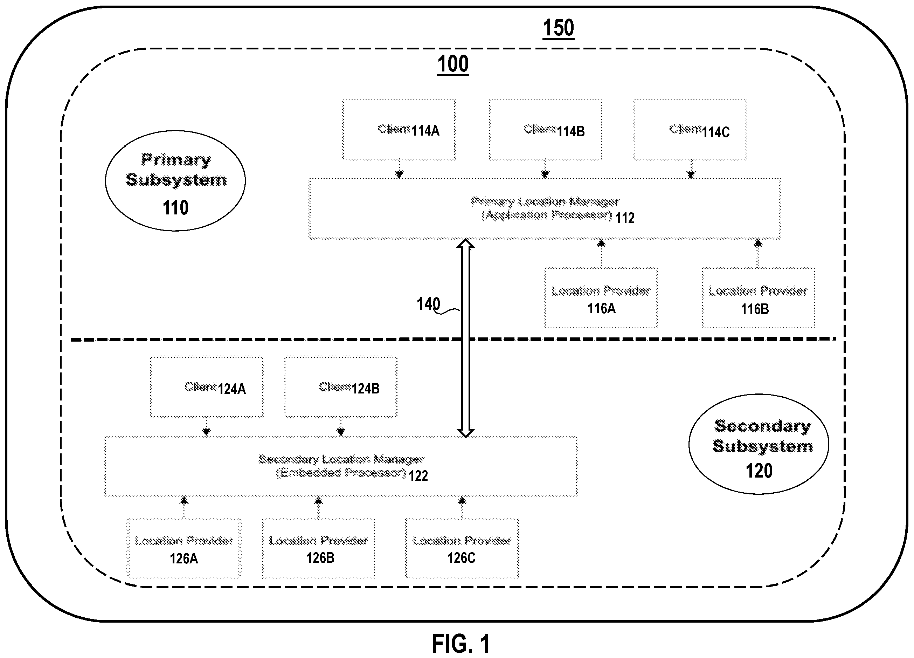

The disclosed embodiments are directed a wireless device distributed location management system and method that optimizes the allocation and distribution of resources in providing location services. In particular, FIG. 1 depicts a non-limiting example of distributed location management system 100 corresponding to wireless device 150, in accordance with various aspects and principles of the present disclosure.

As used herein, the term "wireless device" refers to any electronic device that may communicate with other devices via wireless signals. Such devices may comprise, for example, a laptop, mobile device, cellular/smartphone, gaming device, tablet computer, a wireless-enabled patient monitoring device, personal communication system (PCS) device, personal digital assistant (PDA), personal audio device (PAD), portable navigational device, and/or any other electronic wireless-enabled device configured to receive a wireless signal. It may also include relatively stationary devices such as desktop computers with wireless capabilities. Such wireless devices may communicate via any number of wireless communication protocols, examples of which are described below.

As depicted in FIG. 1, system 100 employs a distributed location management architecture which is functionally/logically partitioned into Primary Location Subsystem 110 and Secondary Location Subsystem 120. As such, Primary Location Subsystem 110 and Secondary Location Subsystem 120 may be partitioned by a variety of schemes, such as, for example, employing different processors, different OSs, different memories, or any other suitable partitioning scheme.

As illustrated, Primary Location Subsystem 110 includes Primary Location Manager (PLM) entity 112, one or more location clients 114A, 114B, 114C that are communicatively coupled to PLM entity 112, and one or more location providers (LPs) 116A, 116B that are also communicatively coupled to PLM entity 112. The number of location clients and LPs depicted is not, in any way, intended to be limiting. PLM entity 112 is configured to control and manage the various location providers/sensors 116A, 116B and distribute location information to location clients 114A, 114B, 114C that are registered for location services. PLM entity 112 may comprise an application processor as well operate within the OS domain of wireless device 150.

Location clients 114A, 114B, 114C represent entities/applications/modules that initiate requests to PLM 112 for location services in an effort to identify the location of wireless device 150. The number of location clients is not, in any way, intended to be limiting. The initiated requests may be accompanied by a set of characteristic threshold requirements, i.e., Quality of Location Services (QoLS) parameters, that may include, for example, power consumption requirements, location resolution/accuracy levels, location data periodicity, location coverage areas, etc. Such entities may take the form of user-applications, OS location services, IT-based applications, etc.

Location providers (LPs) 116A, 116B represent entities that are configured to perform location services sessions to produce location data, under the direction of PLM 112. The number of LPs depicted is not, in any way, intended to be limiting. Selection and direction of any particular LP may be based on the LP's capabilities to perform the location services sessions in accordance with the QoLS parameters, as specified by the clients' 114A, 114B, and/or 114C requests. Such entities may take the form of global-navigation-satellite/global positioning system modules, e.g., GNSS, GPS, GLONASS, Galileo, COMPASS, BEIDOU, etc., as well as wireless communication modules capable of providing location/position data and indoor position data, such as, Wi-Fi, WiMax, WWAN, WLAN, WPAN, Bluetooth, GSM, CDMA, GPRS, 3G or 4G, LTE, Wireless USB, IEEE 802.11x standard, etc.

Similarly, Secondary Location Subsystem 120 includes Secondary Location Manager (SLM) entity 122, one or more location clients 124A, 124B that are communicatively coupled to SLM entity 122, and one or more location providers (LPs) 126A, 126B, 126C that are also communicatively coupled to SLM entity 122. SLM entity 112 is configured to control and manage the various location providers/sensors 126A, 126B and distribute location information to location clients 124A, 124B, 124C that are registered for location services. SLM entity 122 is designed as a dedicated off-load engine to alleviate the workload of PLM 112 in location service tasking. As such, SLM entity 122 may take the form of an auxiliary processing unit, an embedded processor, or virtual processor and may operate under a different OS or, alternatively, not employ any OS.

Like the PLM-associated clients, location clients 124A, 124B, represent entities/applications/modules that initiate requests to SLM 122 for location services in an effort to identify the location of wireless device 150. The number of location clients depicted is not, in any way, intended to be limiting. As noted above, the initiated requests may be accompanied by a set of characteristic threshold requirements, i.e., Quality of Location Services (QoLS) parameters, that may include, for example, power consumption requirements, location resolution/accuracy levels, location data periodicity, location coverage areas, etc. Such entities may take the form of user-applications, OS location services, IT-based applications, etc.

Moreover, location providers (LPs) 126A, 126B, 126C represent entities that are configured to perform location services sessions to produce location data, under the direction of SLM 122. The number of LPs depicted is not, in any way, intended to be limiting. Selection and direction of any particular LP may be based on the LP's capabilities to perform the location services sessions in accordance with the QoLS parameters, as specified by the clients' 124A and/or 124B requests. As noted above, such entities may take the form of global-navigation-satellite/global positioning system modules, e.g., GNSS, GPS, GLONASS, Galileo, COMPASS, BEIDOU, etc., as well as wireless communication modules capable of providing location/position data and indoor position data, such as, Wi-Fi, WiMax, WWAN, WLAN, WPAN, Bluetooth, GSM, CDMA, GPRS, 3G or 4G, LTE, Wireless USB, IEEE 802.11x standard, etc.

As depicted in FIG. 1, Secondary Location Subsystem 120 of wireless device 150 communicates with Primary Location Subsystem 110 via communications facility 140. Communications facility 140 enables Secondary Location Subsystem 120 to advertise, publish, or otherwise report its current location capabilities or complementary location capabilities to Primary Location Subsystem 110 and enables the PLM to control, send commands, and query for information or data from the SLM or its associated providers. In particular, communications facility 140 communicates such capability profiles from SLM entity 122 (or its associated OS) to PLM entity 112 (or its associated OS). As such, communications facility 140 may be embodied as a common application programming interface (API), a messaging protocol, a driver interface, or any other suitable communications interface mechanism.

As noted above, by virtue of the disclosed configuration, SLM entity 122 of Secondary Location Subsystem 120 may advertise to PLM entity 112 of Primary Location Subsystem 110 of its current location/complementary location capability profiles. SLM entity 122 may advertise such capabilities each time there is a change in status, such as, registering for location services, deregistering for location services, activation of LP to commence session, client request to terminate session, etc.

Moreover the capabilities profile information may include what location services sessions are currently being performed by Secondary Location Subsystem 120 as well as to what QoLS levels the sessions are being performed. The advertising or publishing of such profile information, via communications facility 140, enables PLM entity 112 to dynamically make an informed determination as to which of the LPs, whether being associated with PLM 112 or SLM 122, would be optimal in performing a requested location services session given the prescribed QoLS requirements.

To this end, PLM entity 112 may be further configured with a table, listing, or other suitable data structure construct that chronicles the LP capabilities. The table or listing may include the SLM-associated LP capability profiles, as updated and advertised to PLM entity 112 by the complementary location information provided via communications facility 140, as well as the PLM-associated LP capability profiles managed by PLM 112. The LP capability profiles may be represented in terms of the LP's ability to perform location services at certain QoLs levels and the resource costs associated with employing the LP. For example, in a non-limiting embodiment, the listing of LP capability profiles may be chronicled by PLM entity 112 in LP capabilities table having the form presented by Table I, as shown below.

**TABLE I**

| **Location Provider** | **Status** | **QoLS (accuracy/power/coverage/etc.)** | **Resource Cost** |
|---|---|---|---|
| LP 116A (PLM associated) | active | low/low/broad range... | low |
| LP 116B (PLM associated) | active | med/med/med range ... | medium |
| LP 126A (SLM associated) | inactive | med/high/restricted range... | high |
| LP 126B (SLM associated) | inactive | high/med/restricted range... | med |
| LP 126B (SLM associated) | active | high/high/restricted range... | high |

For both PLM- and SLM-associated LPs, Table I indicates what QoLS levels each LP is able to operate in performing its location services session, whether the LP is currently active in performing a session, as well as the resource costs associated with each LP in performing such services. The resource costs may be based on the power consumption of each LP as well as the current activity status of the LP. For example, an inactive LP may require a high power level to activate and satisfy a new location services session request, thereby resulting in a high resource cost. However, if that same LP is currently active with an ongoing session, the additional power level required to "piggyback" on the ongoing session to satisfy the new location services session request may be low, thereby resulting in a low resource cost.

Alternatively, or in addition to, PLM entity 112 may be configured to periodically query or poll, via communications facility 140 or other suitable facility, the SLM-associated and PLM-associated LPs for their capabilities and services during the PLM entity 112 decision-making/selection process. This polling feature may complement operations, as LPs may actively advertise their capabilities during run-time, and PLM entity 112 may then store that information for later-use, when it needs to select an LP in order to comply with client-request or other changes in the system.

Armed with the capabilities profile information chronicled by the LP capabilities table, PLM entity 112 may dynamically make an informed determination as to which LP to select in order to optimize the performance of a requested location services session in view of the prescribed QoLS requirements and LP resource costs. For example, PLM entity 112 may optimize location services performance by selecting, for a particular location services scenario, the LP that requires the minimum power levels while still sufficiently satisfying the QoLS requirements associated with the location services request.

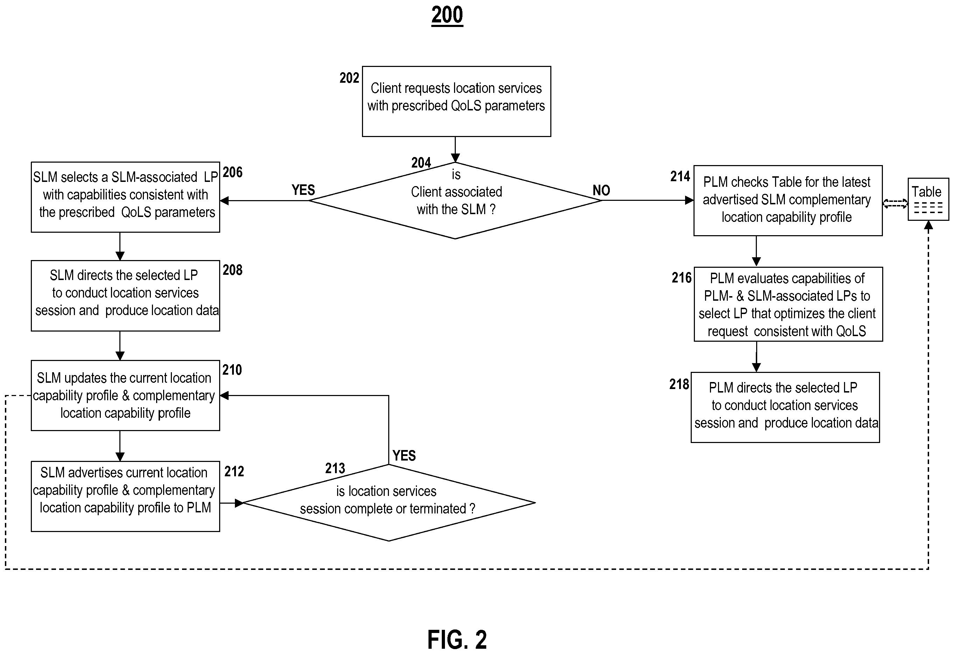

With this said, FIG. 2 depicts a flow diagram generically depicting process 200 which dynamically manages distributed location manager entities, in accordance with various aspects and principles of the present disclosure. Initially, at block 202, process 200 reflects a client requesting location services having a set of specified (QoLS) parameters. For the purposes of illustrating the management, direction, and performance of location service interactions between Primary Location Subsystem 110 and Secondary Location Subsystem 120, at this stage, the requesting client may be associated with PLM entity 112 (e.g., clients 114A, 114B, or 114C) or the requesting client may be associated with SLM entity 122 (e.g., clients 124A or 124B). It should be understood that this description is generalized to be tractable and is not intended to be limiting in any way. As such, in practice, the actual implementation may directly specify an SLM-associated client or a PLM-associated client. Moreover, as discussed above, the QoLS parameters requested by the client, whether initiated by an SLM-associated client or PLM-associated client, may include, for example, power consumption requirements, location resolution/accuracy levels, location information periodicity, location coverage areas, etc.

So, at block 204, process 200 determines whether the requesting client is an SLM-associated client or PLM-associated client. If the client is associated with SLM 122 (i.e., YES at block 204), then process 200 advances to block 206, where SLM entity 122 selects an SLM-associated location provider (LP) that has previously registered with SLM entity 122 as having the capabilities and resources to satisfy the prescribed QoLS parameters (e.g., LPs 126A, 126B, or 126C) included in the client request. At block 208, SLM entity 122 directs the selected SLM-associated LP (e.g., LPs 126A, 126B, or 126C) to perform a location services session to produce the location data in accordance with the requirements specified by the prescribed QoLS parameters.

At block 210, SLM entity 122 updates the current location capability profile indicating the current QoLS capabilities that are potentially available as well as the complementary location capability profile indicating what QoLS parameters are being employed in current location services session that may not impose additional power requirements. For example, SLM entity 122 may update the complementary location capability profile to indicate that one of its LPs, such as, for example, LP 126A, is currently conducting a location services session having a medium level power consumption threshold requirement and a medium level accuracy requirement.

Then, at block 212, SLM entity 122 advertises, publishes, or otherwise reports the updated current and complementary location profiles to PLM entity 112. As noted above, such information is received and chronicled by PLM 112 in the form of an LP capabilities table, listing, or other construct (e.g., see Table I above).

Process 200 also checks whether the current location services session is ongoing, at block 213. If so, process 200 loops back to block 210, in order for SLM entity 122 to update current and complementary location profiles and then, at block 212, SLM entity 122 advertises or reports the updated current and complementary location profiles to PLM entity 112.

Returning back to block 204, if process 200 determines that the requesting client is a PLM-associated client (i.e., NO at block 204), such as, for example, client 114A, 114B, or 114C, PLM entity 112 checks the LP capabilities table, at block 214. As discussed above, the table chronicles both, the latest advertised SLM-associated LP complementary location capability profile as well as the PLM-associated LP capability profile. Then, at block 216, process 200 provides that PLM entity 112 evaluates the capabilities of the PLM- & SLM-associated LPs in an effort to select the LP that optimizes the performance of the requested location services session in view of the prescribed QoLS requirements and LP resource costs. Finally, at block 218, PLM entity 112 directs the selected LP to conduct location services session and produce the location data

In this manner, the disclosed process not only makes PLM 112 aware of SLM 122 status and activities, it also facilitates the dynamic evaluation of both PLM- and SLM-associated LP capabilities to select the LP that optimizes the performance of a requested location services session in view of the prescribed QoLS requirements and LP resource costs. That is, by virtue of the disclosed process, PLM 112 may select an inactive PLM-associated LP, an inactive SLM-associated LP, an active PLM-associated LP to "piggyback" on an ongoing session, or an active SLM-associated LP to "piggyback" on an ongoing session, as long as the selected LP optimizes the performance of the requested session by sufficiently satisfying the prescribed QoLS requirements while minimizing LP resource costs.

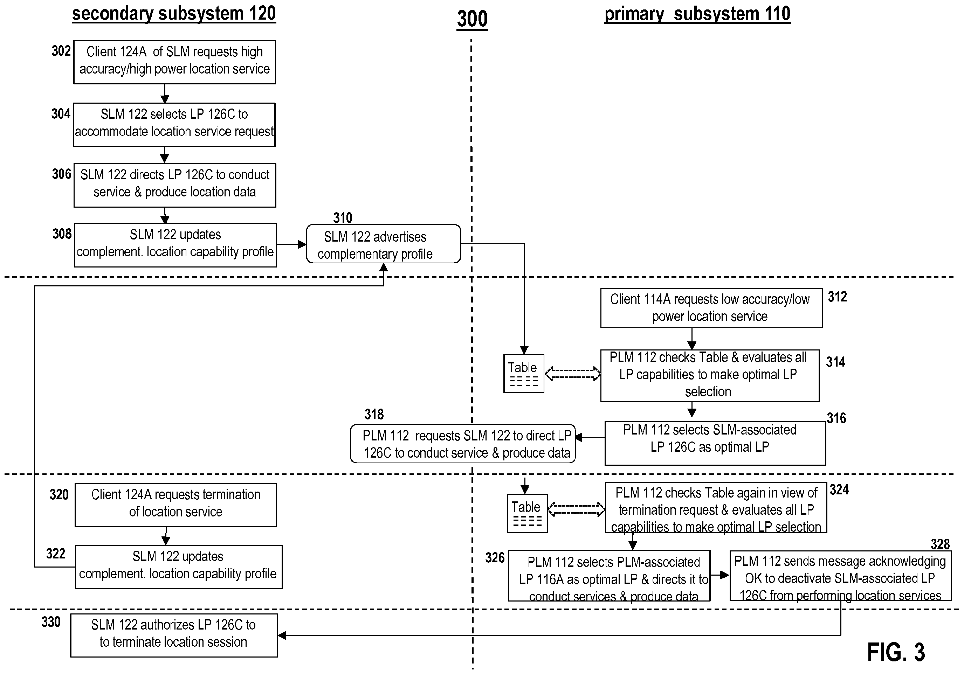

By way of illustration, FIG. 3 depicts a flow diagram illustrating an exemplary implementation 300 based on process 200 disclosed above. Exemplary implementation 300 commences at block 302 where SLM-associated client 124A requests location service with high accuracy and high power QoLS parameter requirements. At block 304, SLM entity 122 selects LP 126C based on its registered capabilities and ability to handle the high level request and, at block 306, SLM entity 122 directs LP 126C to conduct the requested location service session and produce the corresponding location data. At block 308, SLM entity 122 updates its complementary location capability profile to reflect the session activity, status, and resource costs and, at block 310, SLM 122 advertises the updated profile to PLM entity 112, where PLM entity 112 chronicles the updated profile in its LP capabilities table.

Subsequently, at block 312, PLM-associated client 114A requests location service with low accuracy, low power QoLS parameter requirements. At block 314, PLM entity 112 refers to its LP capabilities table and evaluates all LPs to determine which LP optimizes the performance of the requested location services session in view of the prescribed QoLS requirements and LP resource costs. In this example, based on the ongoing high accuracy/high power location service session performed by SLM-associated LP 126C and the determination that the resource costs in employing LP 126C to perform the newly-requested low power/low accuracy session by piggybacking on the ongoing session would be minimal, PLM entity 112 selects LP 126C as the optimal LP. And, at block 318, PLM entity 122 initiates a request to SLM entity 122 to direct LP 126C to conduct the newly-requested location service session and produce the corresponding location data.

Subsequently, at block 320, SLM-associated client 124A makes a request to SLM entity 122 to terminate its previously-requested location service and, at block 322, SLM entity 122 updates its complementary location capability profile to reflect the termination request and advertises the same to PLM entity 122. PLM entity 122 chronicles the termination request in its LP capabilities table and, at block 324, again evaluates all LPs to determine which LP optimizes the performance of the requested location services session in view of the termination request, the prescribed QoLS requirements associated with the client 114A request, and prevailing LP resource costs. In this example, PLM entity 112 selects PLM-associated LP 116A and directs this LP to intervene and conduct the location service session requested by client 114A and produce the corresponding location data.

Then, at block 328, PLM entity 112 initiates a message to SLM entity 122 acknowledging that it is acceptable to deactivate SLM-associated LP 126C from continuing to conduct location services. Finally, at block 330, SLM entity 122 directs LP 126C to discontinue performance of location services.

It should be appreciated that exemplary implementation 300, highlights some of the aspects and principles of the present disclosure and, in particular, dynamic evaluation of both PLM- and SLM-associated LP capabilities by PLM 112 to select the LP that optimizes the performance of a requested location services session in view of the prescribed QoLS requirements and LP resource costs.

### EXAMPLES

The following examples pertain to further embodiments and/or aspects of the instant disclosure.
Example 1 is directed to a wireless device having location servicing capabilities that includes a first location processing entity configured to manage one or more first client applications associated with the first location processing entity and manage one or more first location providers associated with the first location processing entity, the first client applications configured to initiate location service requests and the first location providers configured to perform location service operations; a second location processing entity configured to manage one or more second client applications associated with the second location processing entity, and manage one or more second location providers associated with the second location processing entity, the second client applications configured to initiate location service requests and the second location providers configured to perform location service operations; and a communications facility configured to accommodate communications between the first location processing entity and the second location processing entity. The second location processing entity reports the capabilities of the second location providers to the first location processing entity via the communications facility and, in response to receiving a location service request, the first location processing entity evaluates capabilities of the first location providers and the reported capabilities of the second location providers to select one of the first or second location providers that optimize location service performance.
In Example 2, the subject matter of Example 1 may optionally provide that the first location processing entity comprises a main processor unit of the wireless device.
In Example 3, the subject matter of Example 1 may optionally provide that the second location processing entity comprises an auxiliary processing unit of the wireless device.
In Example 4, the subject matter of Example 1 may optionally provide the received location service request includes quality of location service parameter requirements.
In Example 5, the subject matter of Example 4 may optionally provide that the quality of location service parameter requirements includes one or more of the following: power consumption requirements, location resolution/accuracy levels, location information periodicity, and location coverage areas.
In Example 6, the subject matter of Example 1 may optionally provide that the reporting of the capabilities of the second location providers by the second location processing entity comprises a complementary advertisement mechanism.
In Example 7, the subject matter of Example 1 may optionally provide that the first location processing entity further includes a data structure construct that stores the capabilities of the first location providers and the reported capabilities of the second location providers.
In Example 8, the subject matter of Example 7 may optionally provide that the data structure construct is updated upon a change in capabilities of the first location providers and the second location providers.
In Example 9, the subject matter of Example 1 may optionally provide that the first location processing entity periodically queries the first location providers and second location providers to receive capabilities information.
In Example 10, the subject matter of Example 1 may optionally provide that the evaluation of the first location processing entity to select one of the first or second location providers that optimize location service performance is based on the capabilities of the first location providers and the reported capabilities of the second location providers in accordance with one or more of the following: power consumption requirements, resource costs, location resolution/accuracy levels, location information periodicity, location coverage areas, and status of active/inactive location providers.
In Example 11, the subject matter of Example 1 may optionally include one or more of the following: a laptop, a mobile device, a cellular/smartphone device, a gaming device, a tablet computer, a patient monitoring device, a personal communication system (PCS) device, a personal digital assistant device, personal audio device, and portable navigational device.
Example 12 is a directed to a method of managing a wireless device having location servicing capabilities that includes managing, by a first location processing entity, one or more first client applications associated with the first location processing entity, the first client applications configured to initiate location service requests; managing, by the first location processing entity, one or more first location providers associated with the first location processing entity, the first location providers configured to perform location service operations; managing, by a second location processing entity, one or more second client applications associated with the second location processing entity, the second client applications configured to initiate location service requests; managing, by the second location processing entity, one or more second location providers associated with the second location processing entity, the second location providers configured to perform location service operations; and accommodating, via a communications facility, communications between the first location processing entity and the second location processing entity. The second location processing entity reports the capabilities of the second location providers to the first location processing entity via the communications facility and, wherein, in response to receiving a location service request, the first location processing entity evaluates capabilities of the first location providers and the reported capabilities of the second location providers to select one of the first or second location providers that optimize location service performance.
In Example 13, the subject matter of Example 12 may optionally include that the first location processing entity comprises a main processor unit of the wireless device.
In Example 14, the subject matter of Example 12 may optionally include that the second location processing entity comprises an auxiliary processing unit of the wireless device.
In Example 15, the subject matter of Example 12 may optionally include that the received location service request includes quality of location service parameter requirements.
In Example 16, the subject matter of Example 15 may optionally include that the quality of location service parameter requirements includes one or more of the following: power consumption requirements, location resolution/accuracy levels, location information periodicity, and location coverage areas.
In Example 17, the subject matter of Example 12 may optionally include that the reporting of the capabilities of the second location providers by the second location processing entity comprises a complementary advertisement mechanism.
In Example 18, the subject matter of Example 12 may optionally include that the first location processing entity further includes storing, in a data structure construct, the capabilities of the first location providers and the reported capabilities of the second location providers.
In Example 19, the subject matter of Example 18 may optionally include that the data structure construct is updated upon a change in capabilities of the first location providers and the second location providers.
In Example 20, the subject matter of Example 12 may optionally include that the first location processing entity periodically queries the first location providers and second location providers to receive capabilities information.
In Example 21, the subject matter of Example 12 may optionally include that the evaluating of the first location processing entity to select one of the first or second location providers that optimize location service performance is based on the capabilities of the first location providers and the reported capabilities of the second location providers in accordance with one or more of the following: power consumption requirements, resource costs, location resolution/accuracy levels, location information periodicity, location coverage areas, and status of active/inactive location providers.
In Example 22, the subject matter of Example 12 may optionally include that the wireless device comprises one or more of the following: a laptop, a mobile device, a cellular/smartphone device, a gaming device, a tablet computer, a patient monitoring device, a personal communication system (PCS) device, a personal digital assistant device, personal audio device, and portable navigational device.
Example 23 is directed to a non-transitory computer readable medium bearing computer-executable instructions for managing a wireless device having location servicing capabilities, the instructions when executed performing the functions of managing, by a first location processing entity, one or more first client applications associated with the first location processing entity, the first client applications configured to initiate location service requests; managing, by the first location processing entity, one or more first location providers associated with the first location processing entity, the first location providers configured to perform location service operations; managing, by a second location processing entity, one or more second client applications associated with the second location processing entity, the second client applications configured to initiate location service requests; managing, by the second location processing entity, one or more second location providers associated with the second location processing entity, the second location providers configured to perform location service operations; and accommodating, via a communications facility, communications between the first location processing entity and the second location processing entity. The second location processing entity reports the capabilities of the second location providers to the first location processing entity via the communications facility and, wherein, in response to receiving a location service request, the first location processing entity evaluates capabilities of the first location providers and the reported capabilities of the second location providers to select one of the first or second location providers that optimize location service performance.
In Example 24, the subject matter of Example 23 may optionally include that the first location processing entity comprises a main processor unit of the wireless device.
In Example 25, the subject matter of Example 23 may optionally include that the second location processing entity comprises an auxiliary processing unit of the wireless device.
In Example 26, the subject matter of Example 23 may optionally include that the received location service request includes quality of location service parameter requirements.
In Example 27, the subject matter of Example 26 may optionally include that the quality of location service parameter requirements includes one or more of the following: power consumption requirements, location resolution/accuracy levels, location information periodicity, and location coverage areas.
In Example 28, the subject matter of Example 23 may optionally include that the reporting of the capabilities of the second location providers by the second location processing entity comprises a complementary advertisement mechanism.
In Example 29, the subject matter of Example 23 may optionally include that the first location processing entity further includes storing, in a data structure construct, the capabilities of the first location providers and the reported capabilities of the second location providers.
In Example 30, the subject matter of Example 29 may optionally include that the data structure construct is updated upon a change in capabilities of the first location providers and the second location providers.
In Example 31, the subject matter of Example 23 may optionally include that the first location processing entity periodically queries the first location providers and second location providers to receive capabilities information.
In Example 32, the subject matter of Example 23 may optionally include that the evaluating of the first location processing entity to select one of the first or second location providers that optimize location service performance is based on the capabilities of the first location providers and the reported capabilities of the second location providers in accordance with one or more of the following: power consumption requirements, resource costs, location resolution/accuracy levels, location information periodicity, location coverage areas, and status of active/inactive location providers.
In Example 33, the subject matter of Example 23 may optionally include that the wireless device comprises one or more of the following: a laptop, a mobile device, a cellular/smartphone device, a gaming device, a tablet computer, a patient monitoring device, a personal communication system (PCS) device, a personal digital assistant device, personal audio device, and portable navigational device.
Example 34 is directed to a computer-implemented method for managing a wireless device having location servicing capabilities that includes managing, by a first location processing entity, one or more first client applications associated with the first location processing entity, the first client applications configured to initiate location service requests; managing, by the first location processing entity, one or more first location providers associated with the first location processing entity, the first location providers configured to perform location service operations; managing, by a second location processing entity, one or more second client applications associated with the second location processing entity, the second client applications configured to initiate location service requests; managing, by the second location processing entity, one or more second location providers associated with the second location processing entity, the second location providers configured to perform location service operations; and accommodating, via a communications facility, communications between the first location processing entity and the second location processing entity. The second location processing entity reports the capabilities of the second location providers to the first location processing entity via the communications facility and, wherein, in response to receiving a location service request, the first location processing entity evaluates capabilities of the first location providers and the reported capabilities of the second location providers to select one of the first or second location providers that optimize location service performance.
In Example 35, the subject matter of Example 34 may optionally include that the first location processing entity comprises a main processor unit of the wireless device.
In Example 36, the subject matter of Example 34 may optionally include that the second location processing entity comprises an auxiliary processing unit of the wireless device.
In Example 37, the subject matter of Example 34 may optionally include that the received location service request includes quality of location service parameter requirements.
In Example 38, the subject matter of Example 37 may optionally include that the quality of location service parameter requirements includes one or more of the following: power consumption requirements, location resolution/accuracy levels, location information periodicity, and location coverage areas.
In Example 39, the subject matter of Example 34 may optionally include that the reporting of the capabilities of the second location providers by the second location processing entity comprises a complementary advertisement mechanism.
In Example 40, the subject matter of Example 34 may optionally include that the first location processing entity further includes storing, in a data structure construct, the capabilities of the first location providers and the reported capabilities of the second location providers.
In Example 41, the subject matter of Example 40 may optionally include that the data structure construct is updated upon a change in capabilities of the first location providers and the second location providers.
In Example 42, the subject matter of Example 34 may optionally include that the first location processing entity periodically queries the first location providers and second location providers to receive capabilities information.
In Example 43, the subject matter of Example 34 may optionally include that the evaluating of the first location processing entity to select one of the first or second location providers that optimize location service performance is based on the capabilities of the first location providers and the reported capabilities of the second location providers in accordance with one or more of the following: power consumption requirements, resource costs, location resolution/accuracy levels, location information periodicity, location coverage areas, and status of active/inactive location providers.
In Example 44, the subject matter of Example 34 may optionally include that the wireless device comprises one or more of the following: a laptop, a mobile device, a cellular/smartphone device, a gaming device, a tablet computer, a patient monitoring device, a personal communication system (PCS) device, a personal digital assistant device, personal audio device, and portable navigational device.
Example 45 is directed to a system for managing location service capabilities that includes the wireless device of any one of Examples 1-11.
Example 46 is directed to a computer-readable medium comprising computer-readable instructions physically embodied thereon which, when executed by a processor, causes the performance of the method of any one of Examples 12-22.
Example 47 is directed to an apparatus comprising means for performing the method of any one of Examples 12-22.

Having thus described the basic concepts, it will be rather apparent to those skilled in the art after reading this detailed disclosure that the foregoing detailed disclosure is intended to be presented by way of example only and is not limiting. Various alterations, improvements, and modifications will occur and are intended to those skilled in the art, though not expressly stated herein. These alterations, improvements, and modifications are intended to be suggested by this disclosure, and are within the scope of the exemplary aspects of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure. In addition, the term "logic" is representative of hardware, firmware, software (or any combination thereof) to perform one or more functions. For instance, examples of "hardware" include, but are not limited to, an integrated circuit, a finite state machine, or even combinatorial logic. The integrated circuit may take the form of a processor such as a microprocessor, an application specific integrated circuit, a digital signal processor, a micro-controller, or the like.

Furthermore, the recited order of processing elements or sequences, or the use of numbers, letters, or other designations therefore, is not intended to limit the claimed processes and methods to any order except as can be specified in the claims. Although the above disclosure discusses through various examples what is currently considered to be a variety of useful aspects of the disclosure, it is to be understood that such detail is solely for that purpose, and that the appended claims are not limited to the disclosed aspects, but, on the contrary, are intended to cover modifications and equivalent arrangements that are within the scope of the disclosed aspects.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various inventive aspects. This method of disclosure, however, is not to be interpreted as reflecting an intention that the claimed subject matter requires more features than are expressly recited in each claim. Rather, as the following claims reflect, inventive aspects lie in less than all features of a single foregoing disclosed embodiment. Thus, the claims following the detailed description are hereby expressly incorporated into this detailed description.

## Claims

1. A method of managing a wireless device (150) having location servicing capabilities, the method comprising:
distributing, by a first location processing entity (112), location information to one or more first client applications (114 A-C) which are registered for location services with the first location processing entity, the first client applications configured to initiate location service requests to the first location processing entity;
controlling, by the first location processing entity, one or more first location providers (116 A, B) which have registered their capabilities with the first location processing entity, the first location providers configured to perform location service operations;
distributing, by a second location processing entity (122), location information to one or more second client applications (124 A, B) which are registered for location services with the second location processing entity, the second client applications configured to initiate location service requests to the second location processing entity;
controlling, by the second location processing entity, one or more second location providers (126 A-C) which have registered their capabilities with the second location processing entity, the second location providers configured to perform location service operations; and
accommodating, via a communications facility (140) of the wireless device, communications between the first location processing entity and the second location processing entity,
wherein, the second location processing entity reports the capabilities of the second location providers to the first location processing entity via the communications facility, and
wherein, in response to receiving a location service request to identify the location of the wireless device, the first location processing entity evaluates capabilities of the first location providers and the reported capabilities of the second location providers to select one of the first or second location providers that optimize location service performance in accordance with parameter requirements included in the location service request;;
wherein the first location processing entity comprises a main processor unit of the wireless device; and
wherein the second location processing entity comprises an auxiliary processing unit, an embedded processor, or a virtual processor of the wireless device.

2. The method of claim 1, wherein the received location service request includes quality of location service parameter requirements.

3. The method of claim 2, wherein the quality of location service parameter requirements includes one or more of the following: power consumption requirements, location resolution/accuracy levels, location information periodicity, and location coverage areas.

4. The method of any one of claims 1-3, wherein the reporting of the capabilities of the second location providers by the second location processing entity comprises advertising complementary location profiles to the first location processing entity.

5. The method of any one of claims 1-4, wherein the first location processing entity further includes storing, in a data structure, the capabilities of the first location providers and the reported capabilities of the second location providers.

6. The method of claim 5, wherein the data structure is updated upon a change in capabilities of the first location providers and the second location providers.

7. The method of any one of claims 1-6, wherein the first location processing entity periodically queries the first location providers and second location providers to receive capabilities information.

8. The method of any one of claims 1-7, wherein the evaluating of the capabilities by the first location processing entity to select one of the first or second location providers that optimize location service performance is based on the capabilities of the first location providers and the reported capabilities of the second location providers in accordance with one or more of the following: power consumption requirements, resource costs, location resolution/accuracy levels, location information periodicity, location coverage areas, and status of active/inactive location providers..

9. The method of any one of claims 1-8, wherein the wireless device comprises one or more of the following: a laptop, a mobile device, a cellular/smartphone device, a gaming device, a tablet computer, a patient monitoring device, a personal communication system (PCS) device, a personal digital assistant device, personal audio device, and portable navigational device.

10. An apparatus comprising means to perform the method of any of claims 1-9.

11. The apparatus of claim 10, wherein the apparatus is a wireless device comprising a memory unit and logic.

12. A computer-readable medium comprising computer-readable instructions physically embodied thereon which, when executed by a processor, cause the processor to perform the method of any one of claims 1-9, or realize the apparatus of any one of claims 10-11.

## Patentansprüche

1. Verfahren zum Verwalten eines drahtlosen Geräts (150) mit Location-Servicing-Fähigkeiten, das Verfahren umfassend:
Verteilen, durch eine erste Standortverarbeitungsentität (112), von Standortinformationen an eine oder mehrere erste Client-Anwendungen (114 A-C), die für Location-Services mit der ersten Standortverarbeitungsentität registriert sind, wobei die ersten Client-Anwendungen konfiguriert sind, um Location-Service-Anfragen an die erste Standortverarbeitungsentität zu initiieren;
Steuern, durch die erste Standortverarbeitungsentität, eines oder mehrerer erster Standortanbieter (116 A, B), die ihre Fähigkeiten bei der ersten Standortverarbeitungsentität registriert haben, wobei die ersten Standortanbieter konfiguriert sind, um Location-Service-Operationen durchzuführen;
Verteilen, durch eine zweite Standortverarbeitungsentität (122), von Standortinformationen an eine oder mehrere zweite Client-Anwendungen (124 A, B), die für Location-Services mit der zweiten Standortverarbeitungsentität registriert sind, wobei die zweiten Client-Anwendungen konfiguriert sind, um Location-Service-Anfragen an die zweite Standortverarbeitungsentität zu initiieren;
Steuern, durch die zweite Standortverarbeitungsentität, eines oder mehrerer zweiter Standortanbieter (126 A-C), die ihre Fähigkeiten bei der zweiten Standortverarbeitungsentität registriert haben, wobei die zweiten Standortanbieter konfiguriert sind, um Location-Service-Operationen durchzuführen; und
Ermöglichen, über eine Kommunikationseinrichtung (140) des drahtlosen Geräts, einer Kommunikation zwischen der ersten Standortverarbeitungsentität und der zweiten Standortverarbeitungsentität,
wobei die zweite Standortverarbeitungsentität die Fähigkeiten der zweiten Standortanbieter über die Kommunikationseinrichtung an die erste Standortverarbeitungsentität berichtet, und
wobei, in Reaktion auf das Empfangen einer Location-Service-Anfrage zum Identifizieren des Standorts des drahtlosen Geräts, die erste Standortverarbeitungsentität Fähigkeiten der ersten Standortanbieter und die berichteten Fähigkeiten der zweiten Standortanbieter bewertet, um einen der ersten oder zweiten Standortanbieter auszuwählen, die die Location-Service-Leistung gemäß den in der Location-Service-Anfrage eingeschlossenen Parameteranforderungen optimieren;
wobei die erste Standortverarbeitungsentität eine Hauptprozessoreinheit des drahtlosen Geräts umfasst; und
wobei die zweite Standortverarbeitungsentität eine Hilfsverarbeitungseinheit, einen eingebetteten Prozessor oder einen virtuellen Prozessor des drahtlosen Geräts umfasst.

2. Verfahren nach Anspruch 1, wobei die empfangene Location-Service-Anfrage eine Qualität von Location-Service-Parameteranforderungen einschließt.

3. Verfahren nach Anspruch 2, wobei die Qualität der Location-Service-Parameteranforderungen eines oder mehrere der Folgenden umfasst: Anforderungen an den Leistungsverbrauch, Stufen der Standortauflösung/-genauigkeit, Periodizität der Standortinformationen und Standortabdeckungsbereiche.

4. Verfahren nach einem der Ansprüche 1-3, wobei das Berichten der Fähigkeiten der zweiten Standortanbieter durch die zweite Standortverarbeitungsentität Ankündigen von komplementären Standortprofilen an die erste Standortverarbeitungsentität umfasst.

5. Verfahren nach einem der Ansprüche 1-4, wobei die erste Standortverarbeitungsentität ferner Speichern der Fähigkeiten der ersten Standortanbieter und der berichteten Fähigkeiten der zweiten Standortanbieter in einer Datenstruktur einschließt.

6. Verfahren nach Anspruch 5, wobei die Datenstruktur bei einer Änderung der Fähigkeiten der ersten Standortanbieter und der zweiten Standortanbieter aktualisiert wird.

7. Verfahren nach einem der Ansprüche 1-6, wobei die erste Standortverarbeitungsentität periodisch die ersten Standortanbieter und zweiten Standortanbieter abfragt, um Fähigkeitsinformationen zu empfangen.

8. Verfahren nach einem der Ansprüche 1-7, wobei das Bewerten der Fähigkeiten durch die erste Standortverarbeitungsentität zum Auswählen eines der ersten oder zweiten Standortanbieter, die die Location-Service-Leistung optimieren, auf den Fähigkeiten der ersten Standortanbieter und den berichteten Fähigkeiten der zweiten Standortanbieter gemäß einem oder mehreren der Folgenden basiert: Anforderungen an den Leistungsverbrauch, Ressourcenkosten, Stufen der Standortauflösung/- genauigkeit, Periodizität der Standortinformationen, Standortabdeckungsbereiche und Status von aktiven/inaktiven Standortanbietern.

9. Verfahren nach einem der Ansprüche 1-8, wobei das drahtlose Gerät eines oder mehrere der Folgenden umfasst: einen Laptop, ein mobiles Gerät, ein Mobiltelefon/Smartphone-Gerät, ein Spielgerät, einen Tablet-Computer, ein Patientenüberwachungsgerät, ein Gerät für ein persönliches Kommunikationssystem (PCS, Personal Communication System), einen persönlichen digitalen Assistenten, ein persönliches Audiogerät und ein tragbares Navigationsgerät.

10. Vorrichtung mit Mitteln zum Durchführen des Verfahrens nach einem der Ansprüche 1-9.

11. Vorrichtung nach Anspruch 10, wobei die Vorrichtung ein drahtloses Gerät ist, das eine Speichereinheit und Logik umfasst.

12. Computerlesbares Medium, das computerlesbare Anweisungen umfasst, die physikalisch darauf verkörpert sind, die, wenn sie von einem Prozessor ausgeführt werden, den Prozessor veranlassen, das Verfahren nach einem der Ansprüche 1-9 auszuführen oder die Vorrichtung nach einem der Ansprüche 10-11 zu realisieren.

## Revendications

1. Procédé permettant de gérer un dispositif sans fil (150) ayant des capacités de services de localisation, le procédé comprenant les étapes suivantes :
distribuer, par une première entité de traitement d'emplacement (112), des informations d'emplacement à une ou plusieurs premières applications client (114 A-C) qui sont enregistrées pour des services de localisation auprès de la première entité de traitement d'emplacement, les premières applications client étant configurées pour transmettre des requêtes de services de localisation à la première entité de traitement d'emplacement ;
contrôler, par la première entité de traitement d'emplacement, un ou plusieurs premiers fournisseurs d'emplacement (116 A, B) qui ont enregistré leurs capacités auprès de la première entité de traitement d'emplacement, les premiers fournisseurs d'emplacement étant configurés pour exécuter des opérations de services de localisation ;
distribuer, par une deuxième entité de traitement d'emplacement (122), des informations d'emplacement à une ou plusieurs deuxièmes applications client (124 A, B) qui sont enregistrées pour des services de localisation auprès de la deuxième entité de traitement d'emplacement, les deuxièmes applications client étant configurées pour transmettre des requêtes de services de localisation à la deuxième entité de traitement d'emplacement ;
contrôler, par la deuxième entité de traitement d'emplacement, un ou plusieurs deuxièmes fournisseurs d'emplacement (126 A-C) qui ont enregistré les capacités auprès de la deuxième entité de traitement d'emplacement, les deuxièmes fournisseurs d'emplacement étant configurés pour exécuter des opérations de services de localisation ; et
prendre en charge, par l'intermédiaire d'un moyen de communication (140) du dispositif sans fil, des communications entre la première entité de traitement d'emplacement et la deuxième entité de traitement d'emplacement,
la deuxième entité de traitement d'emplacement transmettant les capacités des deuxièmes fournisseurs d'emplacement à la première entité de traitement d'emplacement par l'intermédiaire du moyen de communication, et
en réponse à la réception d'une requête de services de localisation demandant d'identifier l'emplacement du dispositif sans fil, la première entité de traitement d'emplacement évaluant des capacités des premiers fournisseurs d'emplacement et les capacités transmises des deuxièmes fournisseurs d'emplacement pour sélectionner un des premiers ou deuxièmes fournisseurs d'emplacement qui optimisent des performances de services de localisation selon des exigences de paramètres incluses dans la requête de services de localisation ;
la première entité de traitement d'emplacement comportant une unité principale de traitement du dispositif sans fil ; et
la deuxième entité de traitement d'emplacement comportant une unité auxiliaire de traitement, un processeur incorporé, ou un processeur virtuel du dispositif sans fil.

2. Procédé selon la revendication 1, dans lequel la requête de services de localisation reçue comprend une qualité d'exigences de paramètres de services de localisation.

3. Procédé selon la revendication 2, dans lequel la qualité d'exigences de paramètres de services de localisation comprend un ou plusieurs éléments suivants : des exigences de consommation d'énergie, des niveaux de résolution/précision d'emplacement, une périodicité d'informations d'emplacement, et des zones de couverture de localisation.

4. Procédé selon l'une quelconque des revendications 1-3, dans lequel l'étape consistant à transmettre les capacités des deuxièmes fournisseurs d'emplacement par la deuxième entité de traitement d'emplacement comprend : annoncer des profils d'emplacement complémentaires à la première entité de traitement d'emplacement.

5. Procédé selon l'une quelconque des revendications 1-4, dans lequel la première entité de traitement d'emplacement comprend en outre : stocker, dans une structure de données, les capacités des premiers fournisseurs d'emplacement et les capacités transmises des deuxièmes fournisseurs d'emplacement.

6. Procédé selon la revendication 5, dans lequel la structure de données est mise à jour lors d'un changement de capacités des premiers fournisseurs d'emplacement et des deuxièmes fournisseurs d'emplacement.

7. Procédé selon l'une quelconque des revendications 1-6, dans lequel la première entité de traitement d'emplacement demande périodiquement aux premiers fournisseurs d'emplacement et aux deuxièmes fournisseurs d'emplacement de recevoir des informations de capacités.

8. Procédé selon l'une quelconque des revendications 1-7, dans lequel l'étape d'évaluation des capacités par la première entité de traitement d'emplacement pour sélectionner un fournisseur parmi les premiers ou deuxièmes fournisseurs d'emplacement qui optimisent des performances de services de localisation est basée sur les capacités des premiers fournisseurs d'emplacement et sur les capacités transmises des deuxièmes fournisseurs d'emplacement selon un ou plusieurs éléments suivants : des exigences de consommation d'énergie, des coûts de ressources, des niveaux de résolution/précision d'emplacement, une périodicité d'informations d'emplacement, des zones de couverture de localisation, et un état de fournisseurs d'emplacement actifs/inactifs.

9. Procédé selon l'une quelconque des revendications 1-8, dans lequel le dispositif sans fil comprend un ou plusieurs éléments suivants : un ordinateur portable, un dispositif mobile, un dispositif cellulaire/téléphone intelligent, un dispositif de jeu, un ordinateur tablette, un dispositif de suivi des patients, un dispositif de système de communication personnel (PCS), un dispositif d'assistant personnel numérique, un dispositif personnel audio, et un dispositif de navigation portable.

10. Appareil comprenant des moyens destinés à exécuter le procédé selon l'une quelconque des revendications 1-9.

11. Appareil selon la revendication 10, dans lequel l'appareil est un dispositif sans fil comprenant une unité de mémoire et une logique.

12. Support lisible par ordinateur stockant physiquement des instructions lisibles par ordinateur qui, lorsqu'elles sont exécutées par un processeur, amènent le processeur à mettre en oeuvre le procédé de l'une quelconque des revendications 1-9, ou à réaliser l'appareil de l'une quelconque des revendications 10-11.
